# EUROPEAN PATENT APPLICATION

(11) **EP 3 373 507 A1**
(43) Date of publication of application: **12.09.2018**
(21) Application number: 17190405.5
(22) Date of filing: 11.09.2017
(51) Int. Cl.: H04L 9/08

(54) **KEY SHARING DEVICE, KEY SHARING SYSTEM, KEY SHARING METHOD AND COMPUTER-READABLE MEDIUM**

(30) Priority: 06.03.2017 JP 2017041742; 29.08.2017 JP 2017164169
(71) Applicant: KABUSHIKI KAISHA TOSHIBA, Minato-ku Tokyo 105-8001 (JP)
(72) Inventor: TAKAHASHI, Ririka, Tokyo 105-8001 (JP); TANIZAWA, Yoshimichi, Tokyo 105-8001 (JP)
(74) Representative: Moreland, David

(57) **Abstract**

According to one arrangement, a key sharing device (100; 100-2; 100-3) includes a plurality of individual processing units (500; 500-2; 500-3). Each of the individual processing units (500; 500-2; 500-3) performs any one of a plurality of individual processing operations included in processing that generates a cryptographic key by quantum key distribution. The cryptographic key is shared between the key sharing device (100; 100-2; 100-3) and another key sharing device. The individual processing unit (500; 500-2; 500-3) includes a control unit (502; 502-2; 502-3) that controls execution of the corresponding individual processing operation according to a usage state of a storage that stores result information at least one of a result of an individual processing operation and identification information for identifying the result.

## Description

### FIELD

The present disclosure relates to a key sharing device, a key sharing system, a key sharing method, and a computer-readable medium.

### BACKGROUND

A quantum key distribution (QKD) technique is known where a transmitting device and a receiving device, which are connected by an optical fiber, safely share a cryptographic key by using single photons that are continuously transmitted between the transmitting device and the receiving device.

The number of shared cryptographic keys per unit time is called a secure key rate and corresponds to an operating speed performance of a quantum cryptographic communication system. The greater the number of cryptographic keys that can be used, the faster and the more safely cryptographic data communication can be performed. Therefore, a quantum cryptographic communication system having a greater secure key rate, that is, a quantum cryptographic communication system having a higher performance, is desired.

### BRIEF DESCRIPTION OF THE DRAWINGS

FIG. 1 is a diagram illustrating an example of each process included in QKD;
FIG. 2 is a block diagram of a key sharing system according to a first arrangement;
FIG. 3 is a block diagram of an individual processing unit of the first arrangement;
FIG. 4 is a flowchart of flow control processing according to the first arrangement;
FIG. 5 is a diagram illustrating an example of a data sharing method between processes;
FIG. 6 is a block diagram of a key sharing device according to a second arrangement;
FIG. 7 is a block diagram of an individual processing unit of the second arrangement;
FIG. 8 is a flowchart of flow control processing according to the second arrangement;
FIG. 9 is a diagram illustrating an example of a data discarding method in the second arrangement;
FIG. 10 is a diagram illustrating an example of a relationship between an error rate and a secure key rate;
FIG. 11 is a diagram for explaining flow control according to a modified example 1;
FIG. 12 is a diagram for explaining flow control according to a modified example 2;
FIG. 13 is a diagram for explaining flow control according to a modified example 3;
FIG. 14 is a block diagram of a key sharing device according to a third arrangement;
FIG. 15 is a block diagram of an individual processing unit of the third arrangement;
FIG. 16 is a flowchart of flow control processing according to the third arrangement; and
FIG. 17 is a diagram illustrating an example of a data storage method according to a modified example 5;
FIG. 18 is a diagram illustrating an example of a data storage method according to a modified example 6; and
FIG. 19 is a hardware configuration diagram of the key sharing device according to the first to the third arrangements.

### DETAILED DESCRIPTION

According to one arrangement, a key sharing device includes a plurality of individual processing units. Each of the individual processing units performs any one of a plurality of individual processing operations included in processing that generates a cryptographic key by quantum key distribution. The cryptographic key is shared between the key sharing device and another key sharing device. The individual processing unit includes a control unit that controls execution of the corresponding individual processing operation according to a usage state of a storage that stores result information at least one of a result of an individual processing operation and identification information for identifying the result.

Hereinafter, preferred arrangements of a key sharing device according to the present invention will be described in detail with reference to the attached drawings.

### Overview of QKD

First, an overview of a quantum cryptographic communication system will be described. The quantum cryptographic communication system includes a transmitting device and a receiving device. The transmitting device transmits a photon on an optical fiber link and the receiving device receives and detects the photon. This processing is called quantum communication. Thereafter, the transmitting device and the receiving device exchanges control information with each other, and thereby a cryptographic key is shared between the transmitting device and the receiving device. This processing is called sifting processing.

An error of cryptographic key information generated between the transmitting device and the receiving device is corrected by error correction (EC) processing based on shared cryptographic key information. Further, privacy amplification (PA) corresponding to information compression for removing information that might have been eavesdropped by an eavesdropper from the cryptographic key information is performed. Thereby, finally the transmitting device and the receiving device can share a cryptographic key that is guaranteed not to have been eavesdropped.

The technique as described above can be realized by the QKD. The shared cryptographic key is used when cryptographic data communication is performed between the transmitting device and the receiving device or between applications connected to each device.

In the QKD, a quantum that is used to share a cryptographic key has an uncertainty principle that is one of basic principles of quantum mechanics and where a state is changed by being observed. By these characteristics, when an eavesdropper observes a quantum including information of a cryptographic key transmitted by the transmitting device on a quantum communication channel, a state of the quantum changes, so that the receiving device that has received the quantum can know that the quantum has been observed by an eavesdropper. On this occasion, the change of quantum state appears as a quantum bit error rate (QBER) of a channel between the transmitting device and the receiving device. When an eavesdropper tries to eavesdrop on a quantum, the state of the quantum changes and the QBER increases, so that the transmitting device and the receiving device can know that there is an eavesdropper.

### Performance, Secure Key Rate

As described above, the number of shared cryptographic keys per unit time is called a secure key rate. It can be said that the greater a secure key rate is, the higher the performance of the quantum cryptographic communication system is. The secure key rate is calculated by subtracting the amount of information given to an eavesdropper when quantum communication or classical communication is performed. For example, an error generated in a quantum communication channel is regarded as eavesdropping performed by an eavesdropper even when the error is caused by noise, and the amount of information indicating the error (an error rate of the quantum communication channel, or the like) is subtracted from the secure key rate. In addition, the amount of information that is transmitted and received between the transmitting device and the receiving device in a classical communication path when correcting an error bit of a sifted key in an error correction processing is regarded as being eavesdropped by an eavesdropper and subtracted from the secure key rate.

In this way, the performance of the quantum cryptographic communication system can be evaluated by the secure key rate. The secure key rate is calculated from an error rate of the quantum communication channel, a communication amount of the error correction processing, and the like.

### Flow Control

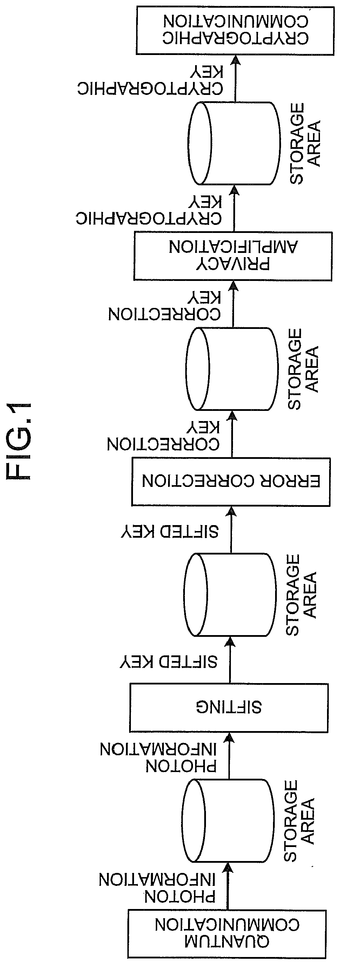

FIG. 1 is a diagram illustrating an example of each process included in the QKD. As illustrated in FIG. 1, in the QKD, quantum communication processing, sifting processing, error correction processing (EC), privacy amplification processing (PA), and cryptographic communication processing are performed.

In the quantum communication processing, for example, a photon string consisting of single photons, which are generated so as to be a polarization state based on base information (transmission base) generated by a randomly selected base on the basis of a photon bit string that is bit information generated by a random number, is transmitted to another key sharing device through a quantum communication channel. The other key sharing device is a partner device that shares a cryptographic key by the QKD. Photon information is, for example, the photon bit string, the transmission base, and the like.

In the QKD, for example, bits whose quantum state has been encoded are processed in order of the sifting processing, the EC, and the PA, and thereby a final cryptographic key used for cryptographic data communication is generated.

At this time, while transferring data for generating a cryptographic key between each process, a final cryptographic key that is used for cryptographic communication is generated. When an order or an interface where each process processes data varies, there is a risk that a key of a transmitter and a key of a receiver do not match. Therefore, for example, a method that can be taken is to provide a storage (a storage area) that accumulates data transferred between each process and use FIFO (First In First Out).

An example of a case when the FIFO is used will be described. The FIFO is also called a first-in first-out method, in which data input earlier is output earlier and data input later is output later than the data input earlier. The FIFO determines an order of inputting and outputting data. A sifted key that is processed by sifting processing is inserted into a storage (FIFO memory) according to the FIFO method. The sifting processing proceeds to processing for generating the next sifted key. The FIFO memory into which the sifted key is inserted by the sifting processing can be referred to by the EC that is a subsequent process. In the EC, the sifted key that is inserted into the FIFO memory by the sifting processing is read and a correction key is generated by using the read sifted key. The correction key is inserted into still another FIFO memory. The EC reads the next sifted key and proceeds to processing for generating the next correction key. The FIFO memory into which the correction key is inserted can be referred to by the PA that is a subsequent process. In the PA, the correction key that is inserted into the FIFO memory by the EC is read and a cryptographic key is generated by using the read correction key. In this way, intermediate buffers (FIFO memories) that maintain an order are provided between processes of the sifting processing, the EC, and the PA, and the processes are sequentially processed.

In a method in which bit data is sequentially transferred when the bit data is generated in each process when the processing speeds of the sifting processing, the EC, and the PA are different, if the processing speed of any one of the processes is slow, the one of the processes determines the entire generation speed of the cryptographic key and it resulted in decrease of the secure key rate. Even in a case where a storage area for accumulating data is provided between each process, if the processing speeds of the processes are different, there is a risk that the upper limit of the storage area is exceeded. If monitoring of the upper limit of the storage area is not controlled in the same manner for the transmitting device and the receiving device, it is difficult to accurately synchronize the transmitting device and the receiving device. Therefore, a problem occurs that the transmitting device and the receiving device have different cryptographic keys or the cryptographic key is not finally generated, so that it resulted in decrease of the secure key rate. As described above, a method that transfers data processed by each process of the QKD without degrading efficiency is required.

There is a technique that considers a case in which the processing speed of the QKD is slow and shortage of cryptographic keys occurs. However, this technique does not consider a case in which the processing speed of the QKD is high and generated keys cannot be stored. Therefore, the arrangements described below enable flow control that can perform the QKD at high speed without degrading the performance of the system, that is, the secure key rate even when an available space of the storage area that stores intermediate keys is consumed.

A key sharing device of the arrangements includes a plurality of individual processing units, each of which performs any one of a plurality of individual processing operations included in processing that generates a cryptographic key shared between the key sharing device and another key sharing device. For example, each of the quantum communication processing, the sifting processing, the error correction processing (EC), the privacy amplification processing (PA), and the cryptographic communication processing, as shown in FIG. 1, corresponds to the individual processing operation. Each individual processing unit controls execution of corresponding individual processing according to an available space of a storage that stores identification information for identifying data (result information) that is a result of the corresponding individual processing.

The flow control may be performed in at least some of the plurality of individual processing operations. In the description below, a case in which the flow control is performed in the sifting processing and the error correction processing will be described as an example. Hereinafter, details of control of processing in each arrangement will be described.

### First Arrangement

When an available space in a storage area provided between each process of the QKD is consumed, a key sharing device according to a first arrangement discards data (result information) that will be newly stored. By discarding the data (result information) that will be newly stored, it is possible to prevent the upper limit of the storage area from being exceeded and also it is possible to prevent the transmitting device and the receiving device from being out of synchronization.

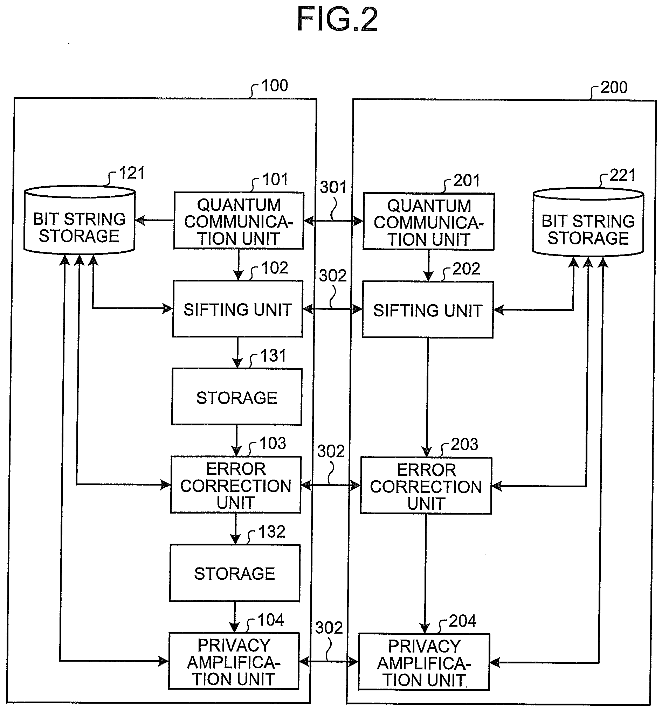

FIG. 2 is a block diagram illustrating an example of the key sharing system according to the first arrangement. As illustrated in FIG. 2, the key sharing system according to the first arrangement includes a key sharing device 100 and a key sharing device 200. The key sharing device 100 and the key sharing device 200 are connected by a quantum communication channel 301 and a classical communication path 302.

The quantum communication channel 301 transmits a photon string consisting of single photons, each of which indicates 0 or 1. The quantum communication channel 301 is, for example, an optical fiber link. The classical communication path 302 transmits data. For example, the classical communication path 302 transmits control data of the sifting processing, the error correction processing, and the privacy amplification processing. The classical communication path 302 may be a wired path or a wireless path or may be realized by combining a wired path and a wireless path. For example, the classical communication path 302 is an Ethernet (registered trademark).

Hereinafter, a case in which the key sharing device 100 functions as a transmitting device and the key sharing device 200 functions as a receiving device will be described as an example. The key sharing device 100 and the key sharing device 200 may be configured to have both functions of the transmitting device and the receiving device.

The key sharing device 100 includes a quantum communication unit 101, a sifting unit 102, an error correction unit 103, a privacy amplification unit 104, storages 131 and 132, and a bit string storage 121.

The quantum communication unit 101 performs the quantum communication processing. For example, the quantum communication unit 101 transmits and receives photon information to and from the key sharing device 200 and stores bit data produced from photons, selected base information, information of pulse used to transmit photons, and the like into the bit string storage 121.

The sifting unit 102 performs the sifting processing. For example, the sifting unit 102 performs the sifting processing to obtain the same bit string between the key sharing device 100 and the key sharing device 200 by reading bit string information, base information, and the like that are stored in the bit string storage 121 and sifting the bit string information based on the base information. The sifting unit 102 stores the extracted bit string (key bit string) into the bit string storage 121.

The error correction unit 103 performs error correction processing. For example, the error correction unit 103 reads information of a shared bit string on which the sifting processing has been performed and which is stored in the bit string storage 121 and corrects errors included in the shared bit string. The error correction unit 103 stores the corrected bit string into the bit string storage 121.

The privacy amplification unit 104 performs the privacy amplification processing. For example, the privacy amplification unit 104 reads information of the shared bit string on which the error correction processing has been performed and which is accumulated in the bit string storage 121. The privacy amplification unit 104, then, performs the privacy amplification processing between the key sharing device 100 and the key sharing device 200. The privacy amplification unit 104 stores the processed bit string into the bit string storage 121.

The storage 131 is arranged between the sifting unit 102 and the error correction unit 103. The storage 132 is arranged between the error correction unit 103 and the privacy amplification unit 104. The storages 131 and 132 store key data to perform flow control that transfers key data when the QKD is performed. When another individual processing unit performs the flow control, a storage that stores the key data may be arranged between the individual processing unit and a processing unit in a subsequent stage.

The storages 131 and 132 may store a key data to be stored in the bit string storage 121 along with identification information (ID) for identifying the key data in place of the bit string storage 121 or may store only identification information for identifying the key data stored in the bit string storage 121. In other words, result information stored in the storages 131 and 132 may include only the ID of the key data or may include both the ID of the key data and the key data. The flow control when performing the QKD is performed based on the key data or the identification information that is stored in the storages 131 and 132.

The bit string storage 121 stores information, such as on a bit string obtained by the quantum communication unit 101, that is acquired or generated in each processing between the key sharing device 100 and the key sharing device 200. The information may be used by another component (another individual processing unit or the like) through the bit string storage 121 or the information may be directly transferred between components.

Each unit described above (the quantum communication unit 101, the sifting unit 102, the error correction unit 103, and the privacy amplification unit 104) is realized by, for example, one or more processors. For example, each unit described above may be realized by causing a processor such as a CPU (Central Processing Unit) to execute a program, that is, may be realized by software. Each unit described above may be realized by a processor such as a dedicated IC (Integrated Circuit), that is, hardware. Each unit described above may be realized by using software and hardware together. When a plurality of processors is used, each processor may realize one of the units or may realize two or more units of the units.

Each storage (the storages 131 and 132 and the bit string storage 121) can be configured by any generally used storage medium such as an HDD (Hard Disk Drive), an optical disk, a memory card, and a RAM (Random Access Memory). The storages may be storage media physically different from each other or may be realized as different storage areas of a physically single storage medium. Further, each of the storages may be realized by a plurality of physically different storage media.

Next, a configuration example of the key sharing device 200 that functions as a receiving device will be described. As illustrated in FIG. 2, the key sharing device 200 includes a quantum communication unit 201, a sifting unit 202, an error correction unit 203, a privacy amplification unit 204, and a bit string storage 221.

The key sharing device 200 communicates with each unit of the key sharing device 100 and performs each process (individual processing) of the QKD. Specifically, the quantum communication unit 201, the sifting unit 202, the error correction unit 203, and the privacy amplification unit 204 perform individual processing operations corresponding to the quantum communication unit 101, the sifting unit 102, the error correction unit 103, and the privacy amplification unit 104 of the key sharing device 100, respectively. The bit string storage 221 stores information that is acquired or generated in each processing between the key sharing device 200 and the key sharing device 100.

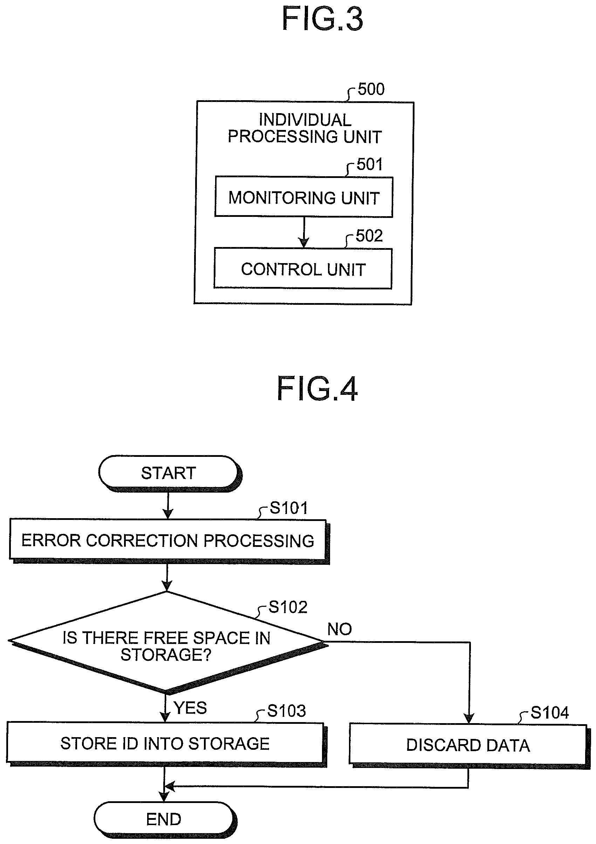

Next, details of the individual processing unit will be described. FIG. 3 is a block diagram illustrating a function configuration example of an individual processing unit 500 of the first arrangement. In the present arrangement, the sifting unit 102 and the error correction unit 103 correspond to the individual processing unit 500. Each of the sifting unit 102 and the error correction unit 103 has functions as illustrated in FIG. 3. As illustrated in FIG. 3, the individual processing unit 500 includes a monitoring unit 501 and a control unit 502.

The monitoring unit 501 monitors the key data or the identification information that is stored in a storage (the storage 131 or the storage 132) arranged between the individual processing unit 500 and a processing unit in a subsequent stage. The monitoring unit 501 monitors whether the key data or the identification information that shall be stored in the storage is not stored and whether there is no available space in a storage area, in order to perform flow control that transfers key data when the QKD is performed. The monitoring unit 501 may further monitor a storage arranged between the individual processing unit 500 and a previous-stage processing unit.

The control unit 502 performs necessary processing according to a state of the storage monitored by the monitoring unit 501. For example, when there is an available space in the storage arranged between the individual processing unit 500 and the processing unit in a subsequent stage, the control unit 502 stores data (result information) to be newly stored into the storage. When the key data or the identification information that is stored in the storage arranged between the individual processing unit 500 and the previous-stage processing unit is empty, the control unit 502 performs flow control so as to wait until previous-stage individual processing stores data (result information). When the amount of the key data or the identification information that is stored in the storage arranged between the individual processing unit 500 and the processing unit in a subsequent stage has already reached the upper limit of the storage, the control unit 502 performs flow control so as to discard data (result information) obtained by the individual processing. Whether data (result information) has already reached the upper limit may be determined by whether the available space of the storage is lower than a threshold value (first threshold value).

Next, flow control processing performed by the key sharing device 100 according to the first arrangement configured as described above will be described with reference to FIG. 4. FIG. 4 is a flowchart illustrating an example of the flow control processing according to the first arrangement. In FIG. 4, flow control in the error correction processing will be described as an example. The same procedure can be applied to other individual processing.

The error correction unit 103 performs the error correction processing (step S101). The monitoring unit 501 of the error correction unit 103 determines whether or not there is an available space in the storage 132 (step S102). When there is the available space (step S102: Yes), the control unit 502 stores, into the storage 132, identification information (ID) of key data on which the error correction processing has been performed (step S103). The control unit 502 may store data (related parameter, error rate, and the like) other than the ID into the storage 132 along with the ID.

When there is not the available space (step S102: No), the control unit 502 discards data (result information) obtained by the error correction processing (step S104).

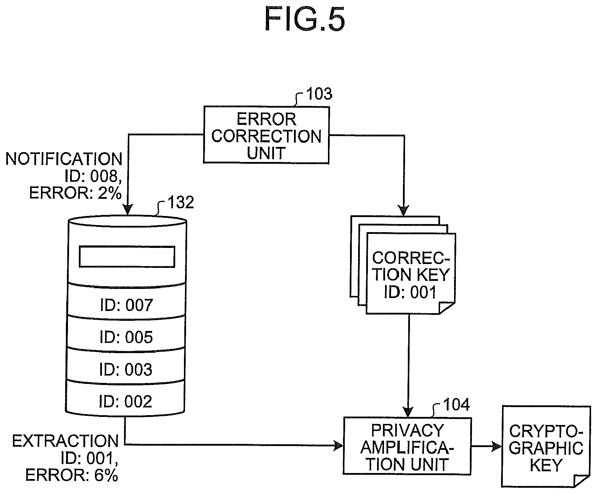

FIG. 5 is a diagram illustrating an example of a data sharing method between processes. As an example, it is considered that data (result information) is shared between EC and PA. The error correction unit 103 includes, for example, a module that repeatedly performs EC and outputs a file of a correction key when the module completes the EC. For example, the file of the correction key is stored in the bit string storage 121.

The error correction unit 103 outputs the file and stores ID of the file whose processing is completed and related parameter and data (error rate, and the like) into the storage 132. At this time, when there is no available space in the storage area of the storage 132, the error correction unit 103 (the control unit 502) discards the data (result information). When there is an available space in the storage area, the error correction unit 103 (the control unit 502) writes the ID and the like into the storage area.

The privacy amplification unit 104 in a subsequent stage includes a module that repeatedly performs PA in a similar manner. This module continuously monitors the storage area of the storage 132. When the storage area is empty, the privacy amplification unit 104 waits until the ID where the EC is completed is stored. When there is data (result information) in the storage area, the privacy amplification unit 104 reads ID and performs PA. At this time, the error correction unit 103 stores IDs in the storage area in order of completion of processing. For example, the privacy amplification unit 104 reads IDs in the order of being stored in the storage area, reads a file of a correction key of the ID, performs processing, and finally generates a cryptographic key.

As described above, when the privacy amplification unit 104 reads data (result information) from the storage 132 to perform the privacy amplification processing, the privacy amplification unit 104 may start with processing data (result information) inserted first, utilizing the feature of FIFO. In the example of FIG. 5, the privacy amplification unit 104 reads data (result information) of [ID: 001] that is inserted first and performs the privacy amplification processing.

In this way, data (result information) is transferred between each process by using a storage area. By detecting that there is no available space in the storage area, it is possible to prevent the upper limit of the storage area from being exceeded and it is possible to prevent the key sharing device 100 and the key sharing device 200 from being out of synchronization and thereby prevent cryptographic keys from being mismatched. Although data such as an error rate is stored in addition to IDs, it is not necessary to perform flow control by referring to such data in the present arrangement.

The prior art does not include a function to perform flow control of data between each processing unit, so that each processing unit performs processing at each processing speed and stores key data in a storage. Further, in the prior art, processing that is performed when there is no available space in a storage area of the storage is not considered. Thus, the transmitting device and the receiving device may become out of synchronization. Therefore, older key data of stored key data may be overwritten or key data may be discarded, so that there is a case in which the cryptographic key cannot be correctly created or the secure key rate is degraded.

The key sharing device 100 according to the first arrangement uses the storages 131 and 132, the monitoring unit 501, and the control unit 502 and thereby performs the flow control that transfers key data when the QKD is performed. The key sharing device 100 monitors that available space is consumed or data (result information) is empty in the storages 131 and 132, and when available space is consumed in the storages 131 and 132, the key sharing device 100 discards data (result information) that will be newly stored. Thereby, it is possible to avoid synchronization deviation and the like due to exceeding the upper limit of the storage area.

### Second Arrangement

When data (result information) that will be newly stored is discarded, the number of finally created cryptographic keys decreases by the amount of the discarded data (result information) and the secure key rate may be degraded. Therefore, in the second arrangement, instead of discarding the data (result information) that will be newly stored, it is controlled so that data (result information) that is preferable to create a cryptographic key is preferentially stored and data (result information) that is unsuitable to create a cryptographic key is discarded. Whether or not it is preferable to create a cryptographic key is determined by a parameter such as, for example, an error rate.

For example, a parameter such as an error rate is compared between stored data (result information) and data (result information) that will be newly stored. When data (result information) that has already been stored in a storage area has a parameter worse than that of the data (result information) that will be newly stored, the data (result information) that has the worse parameter is deleted and the data (result information) that will be newly stored is stored in an allowed space. When the parameter of the data (result information) that will be newly stored is worse than the parameter of the data (result information) that has already been stored, the data (result information) that will be newly stored is discarded and the storage area is not updated.

By such a configuration, it is possible to further improve the secure key rate by preferentially storing data (result information) whose parameter related to the secure key rate is good while reducing deterioration of the secure key rate due to deviation of synchronization between the key sharing devices.

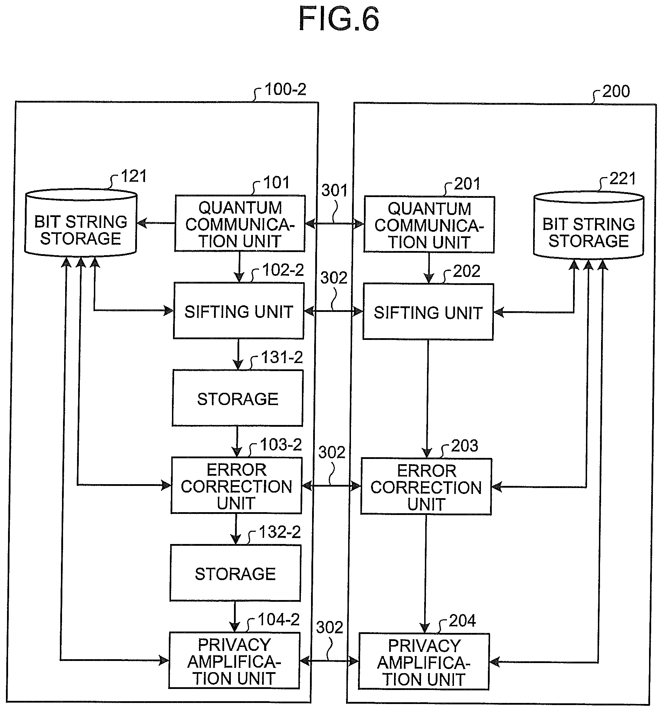

FIG. 6 is a block diagram illustrating an example of a key sharing device 100-2 according to the second arrangement. As illustrated in FIG. 6, the key sharing device 100 includes a quantum communication unit 101, a sifting unit 102-2, an error correction unit 103-2, a privacy amplification unit 104-2, storages 131-2 and 132-2, and a bit string storage 121.

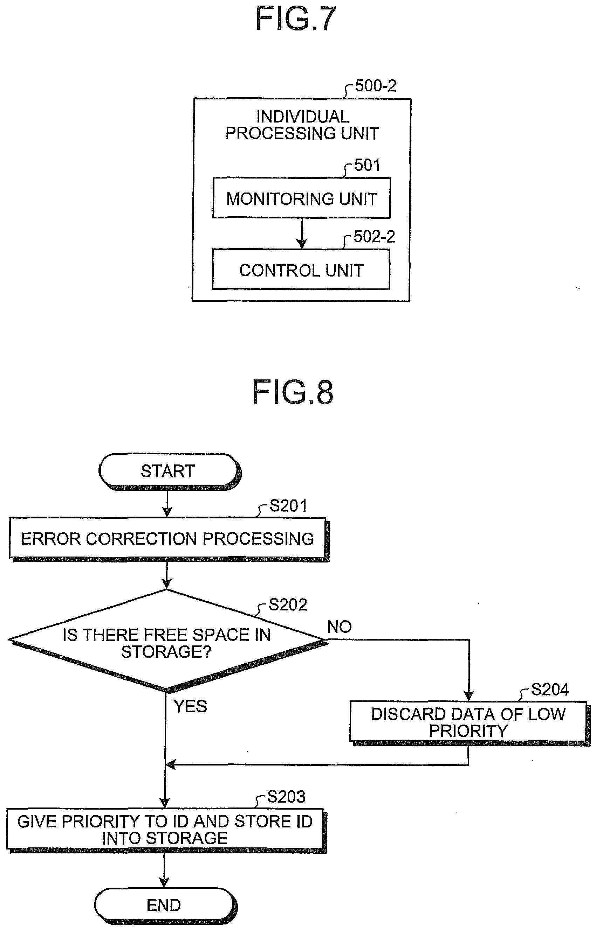

FIG. 7 is a block diagram illustrating a function configuration example of an individual processing unit 500-2 of the second arrangement. In the present arrangement, the sifting unit 102-2 and the error correction unit 103-2 correspond to the individual processing unit 500-2. Each of the sifting unit 102-2 and the error correction unit 103-2 has functions as illustrated in FIG. 7. As illustrated in FIG. 7, the individual processing unit 500-2 includes a monitoring unit 501 and a control unit 502-2.

In the second arrangement, functions of the control unit 502-2 included in the individual processing unit 500-2 (the sifting unit 102-2 and the error correction unit 103-2), the privacy amplification unit 104-2, and the storages 131-2 and 132-2 are different from those of the first arrangement. The other components and functions are the same as those of FIG. 2 that is a block diagram of the key sharing device 100 according to the first arrangement. Thus, the components are denoted by the same reference numerals and the description thereof will not be repeated.

The storages 131-2 and 132-2 are different from the storages 131 and 132 of the first arrangement in that data (priority) for determining a condition is further stored.

The control unit 502-2 is different from the control unit 502 of the first arrangement in that the control unit 502-2 performs flow control taking also priority into consideration. For example, the control unit 502-2 gives priority to data (result information, such as identification information or the like) obtained by individual processing and stores the data in a storage. When there is no available space in the storage (the available space of the storage is lower than a threshold value), the control unit 502-2 deletes data (result information) whose priority is lower than that of other data (result information), from the storage. When data (result information) to which priority is given is stored in a storage between the individual processing unit 500-2 and a previous-stage processing unit, the control unit 502-2 reads data (result information) whose priority is higher than that of other data (result information) from among data (result information) obtained as a result of the previous-stage processing unit and performs corresponding individual processing by using the read data (result information).

The privacy amplification unit 104-2 is different from the privacy amplification unit 104 of the first arrangement in that the privacy amplification unit 104-2 reads data (result information) to be processed from the storage 132-2 taking priority into consideration.

Next, flow control processing performed by the key sharing device 100-2 according to the second arrangement configured as described above will be described with reference to FIG. 8. FIG. 8 is a flowchart illustrating an example of the flow control processing according to the second arrangement. In FIG. 8, flow control in the error correction processing will be described as an example. The same procedure can be applied to other individual processing.

The error correction unit 103-2 performs the error correction processing (step S201). The monitoring unit 501 of the error correction unit 103-2 determines whether or not there is an available space in the storage 132-2 (step S202). When there is the available space (step S202: Yes), the control unit 502-2 gives priority to identification information (ID) of key data on which the error correction processing has been performed and stores the identification information (ID) into the storage 132-2 (step S203).

When there is not the available space (step S202: No), the control unit 502-2 discards (deletes) data (result information) of low priority among data (result information) stored in the storage 132-2 and data (result information) that will be newly stored (step S204). When the control unit 502-2 has deleted data (result information) stored in the storage 132-2, the control unit 502-2 stores data (result information) that will be newly stored in an allowed space in the storage 132-2 secured by the deletion (step S203). When discarding the data (result information) that will be newly stored, the control unit 502-2 does not store data (result information) in the storage 132-2.

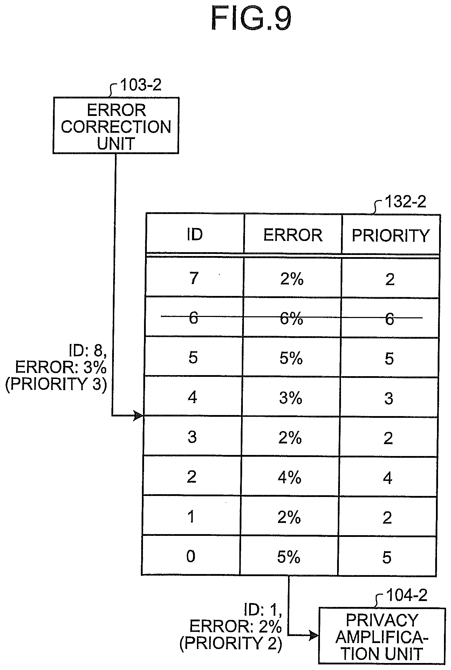

FIG. 9 is a diagram illustrating an example of a data (result information) discarding method in the present arrangement. FIG. 9 illustrates an example where data (result information) is shared between the error correction unit 103-2 and the privacy amplification unit 104-2.

When completing error correction processing, the error correction unit 103-2 outputs a file of a correction key. At this time, the error correction unit 103-2 stores the file into, for example, the bit string storage 121 and also stores ID of the file, related parameter, and data (error rate, and the like) into the storage 132-2. The error correction unit 103-2 gives priority according to, for example, an error rate to the data (result information) and stores the data (result information) in the storage 132-2. The privacy amplification unit 104-2, which is the processing unit in a subsequent stage, reads data (result information) from the storage 132-2 by prioritizing data (result information) whose given priority is high.

When there is no available space in the storage 132-2, the error correction unit 103-2 discards data (result information) whose priority is low. The storage 132-2 that receives data (result information) from the error correction unit 103-2 and from which the privacy amplification unit 104-2 reads data (result information) as illustrated in FIG. 9 will be described as an example. It is assumed that the following data (result information) on which the error correction processing has already been completed are stored in the storage 132-2 and there is no available space in the storage area.
[ID: 0, error rate: 5%]
[ID: 1, error rate: 2%]
[ID: 2, error rate: 4%]
[ID: 3, error rate: 2%]
[ID: 4, error rate: 3%]
[ID: 5, error rate: 5%]
[ID: 6, error rate: 6%]
[ID: 7, error rate: 2%]

The priorities of these data (result information) are determined according to, for example, an error rate. The worse the value of error rate, the lower the secure key rate that is the performance of a system. Therefore, a lower priority is set to data with a worse value. The better the value of error rate, the higher the secure key rate. Therefore, a higher priority is to data with a better value. For example, when it is determined that the priority is the same as the value of error rate, the priority of [ID: 0] is the fifth because the error rate is 5%, the priority of [ID: 1] is the second because the error rate is 2%, the priority of [ID: 2] is the fourth because the error rate is 4%, the priority of [ID: 3] is the second because the error rate is 2%, the priority of [ID: 4] is third because the error rate is 3%, the priority of [ID: 5] is the fifth because the error rate is 5%, the priority of [ID: 6] is the sixth because the error rate is 6%, and the priority of [ID: 7] is the second because the error rate is 2%.

A case is considered where the error correction unit 103-2 newly completes processing and tries to store data (result information) of [ID: 8, error rate: 3%], that is, data (result information) of priority 3, into the storage 132-2. There is no available space in the storage area of the storage 132-2, so that the error correction unit 103-2 (the control unit 502-2) discards (deletes), from the storage 132-2, data (result information) of [ID: 6] having the lowest priority 6 and allows an available space. Thereafter, the error correction unit 103-2 stores the data (result information) of [ID: 8] into the storage 132-2.

In the case of newly inserting data (result information) when there is no available space in the storage 132-2, if the priority of data (result information) that will be newly inserted is lower than priorities of all data (result information) stored in the storage 132-2, the control unit 502-2 discards the data (result information) that will be newly inserted. On the other hand, if the priority of data (result information) that will be newly inserted is higher than a priority of any one of data (result information) stored in the storage 132-2, the control unit 502-2 discards, from the storage 132-2, the data (result information) of low priority and stores the data (result information) that will be newly inserted into the storage 132-2. In this way, the control unit 502-2 performs control so that data (result information) of high priority remain as data (result information) stored in the storage 132-2.

When the privacy amplification unit 104-2 reads data (result information) from the storage 132-2 to perform the privacy amplification processing, the privacy amplification unit 104-2 reads data (result information) in order from, for example, data (result information) that is given the highest priority. In the example of FIG. 9, the privacy amplification unit 104-2 performs the privacy amplification processing by reading data (result information) of [ID: 1, error rate: 2%] whose priority is the highest.

Regarding data (result information) whose priorities are the same, data (result information) inserted earlier may be selected, data (result information) inserted later may be selected, or data (result information) may be selected taking another parameter into consideration. When performing the privacy amplification processing in order from data (result information) of highest priority, data (result information) are processed in order from data (result information) of lowest error rate among data (result information) stored in the storage 132-2, and data (result information) of high error rate may remain in the storage area or may be a candidate of data (result information) to be discarded. Data (result information) of low error rate is preferentially processed, so that data (result information) are processed in order from data (result information) whose calculated secure key rate is highest. Therefore, it is possible to increase the secure key rate as an operation of the entire system.

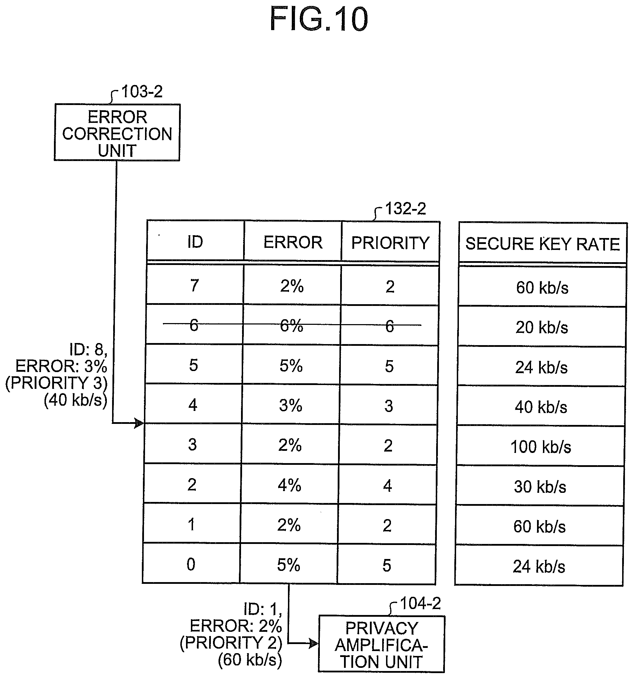

Hereinafter, a specific example of improving the secure key rate will be described. FIG. 10 is a diagram illustrating an example of a relationship between the error rate and the secure key rate.

For example, it is assumed that the same data (result information) as that illustrated in FIG. 9 is stored in the storage 132-2 and secure key rates estimated from each error rate are the values illustrated in FIG. 10. At this time, the error correction unit 103-2 discards data (result information) [ID: 8, error rate: 3%] that will be newly inserted without taking the priority into consideration. In this case, the secure key rate of 40 kb/s, which is a corresponding secure key rate, is discarded.

On the other hand, as in the present arrangement, if the data (result information) of [ID: 6, error rate: 6%] is discarded taking the priority into consideration, the discarded secure key rate is 20 kb/s, so that deterioration of the secure key rate is reduced by 20 (= 40 - 20) kb/s. In this way, the deterioration of the secure key rate is reduced by giving priority according to the error rate to data.

So far, as a parameter, an example of the error rate is described. However, an indicator that is used to determines the priority may be another parameter or may be a combination of the error rate and other parameters. An indicator having a value that increases with respect to data (result information) that is preferable to create a cryptographic key may be used as the priority. For example, it is possible to use an indicator having a value that varies according to a communication state, or an indicator having a value that increases when the reliability of cryptographic key sharing processing is high. The priority may be determined according to one or more of the followings: an error rate of each communication path, a processing speed of each communication path, an estimated value of the number of cryptographic keys generated per unit time, and a processing speed of individual processing. Examples of parameters that can be used for each individual processing unit are shown below.
- The quantum communication unit 101: photon information, processing speed of quantum communication
- The sifting unit 102-2: photon information, estimated error rate, processing speed of sifting processing
- The error correction unit 103-2: error rate, the number of leaked bits, processing speed of error correction processing
- Common to each unit: estimated secure key rate

A data (result information) storage method and a data reading method are not limited to the methods described above. The other methods will be described below.

### Modified Example 1

In a modified example 1, a threshold value for determining whether to discard or store data (result information) is changed according to an available space of the storage area. For example, when the priority is higher than a threshold value (second threshold value) that is changed according to an available space of the storage 132-2, the control unit 502-2 gives the priority to data (result information) and stores the data (result information) in the storage 132-2. When the priority is lower than or equal to the threshold value, the control unit 502-2 discards the data (result information).

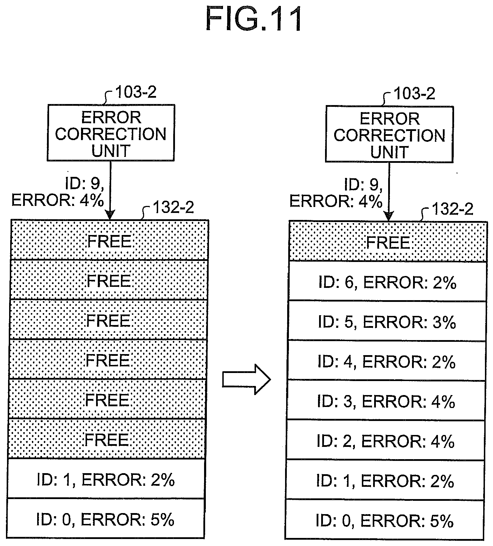

FIG. 11 is a diagram for explaining flow control according to the modified example 1. For example, when the ratio of available space of the storage 132-2 is higher than or equal to X%, the control unit 502-2 stores intermediate data (result information) whose error rate is lower than Y%, that is, whose priority is higher than the threshold value (second threshold value), into the storage 132-2. The control unit 502-2 discards intermediate data (result information) whose error rate is higher than or equal to Y%, that is, whose priority is lower than or equal to the threshold value (second threshold value).

When the ratio of available space of the storage 132-2 is lower than X%, the control unit 502-2 changes the threshold value to be compared with the error rate to Z% lower than Y% and performs determination in the same manner. Thereby, it is possible to consider parameters such as the error rate while preventing the available space of the storage area from being consumed.

A case in which X = 75, Y = 5, and Z = 3 are set will be described as an example with reference to FIG. 11. When the available space of the storage 132-2 is 75 (= X) %, it is unlikely that the available space of the storage area will be consumed. Thus, data (result information) should be stored as much as possible. Therefore, a threshold value Y = 5% is used, and data (result information) of [ID: 9, error rate: 4%] that is newly generated from the error correction unit 103-2 is stored in the storage 132-2. On the other hand, when the available space is 12.5 (< 75 = X) %, it is likely that the available space of the storage area will be consumed. Thus, data (result information) should be discarded as much as possible. Therefore, a threshold value Z = 3% is used, and data (result information) of [ID: 9, error rate: 4%] that is newly generated from the error correction unit 103-2 is discarded.

The method of changing the threshold value (second threshold value) according to the available space of the storage 132-2 is not limited to the method described above. Any method that sets the threshold value so that the greater the available space, the more the data (result information) is stored may be used. For example, it is possible to use a method that gradually changes the threshold value according the available space and a method that calculates the threshold value from a value of the available space by using a calculation formula.

### Modified Example 2

In a modified example 2, a plurality of storage areas (storages) is prepared, and data (result information) are assigned to each storage area according to a value (priority) of a parameter. The plurality of storage areas may be physically different storages or may be different areas of a physically single storage. For example, the control unit 502-2 stores data (result information) in a storage area (storage) determined according to priority from among a plurality of storage areas (storages).

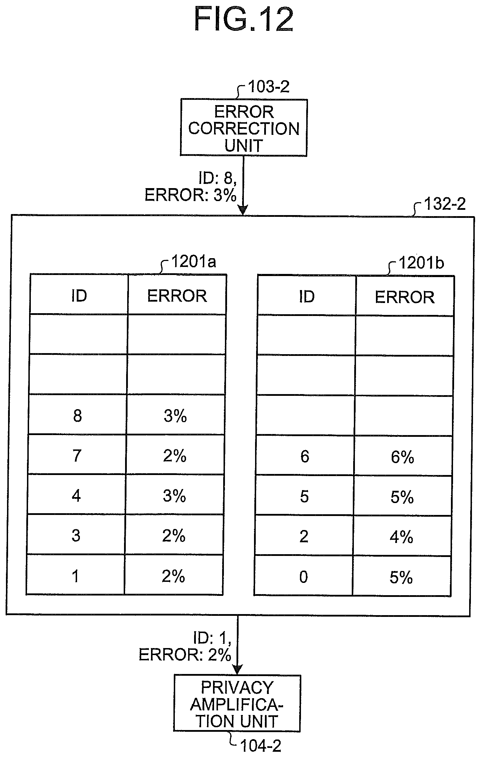

FIG. 12 is a diagram for explaining flow control according to the modified example 2. For example, the error correction unit 103-2 (the control unit 502-2) stores data (result information) whose error rate is lower than 4% into a storage area 1201a and stores data (result information) whose error rate is higher than or equal to 4% into a storage area 1201b. In the example of FIG. 12, the error correction unit 103-2 stores data (result information) of [ID: 8, error rate: 3%] into the storage area 1201a. The number of the storage areas is not limited to two, but three or more storage areas may be used.

By dividing the storage area according to the value of the parameter, the subsequent processing can easily select data (result information) to be read. For example, the privacy amplification unit 104-2 can employ a method of preferentially reading data (result information) from the storage area 1201a, reading data (result information) from the storage area 1201b when data (result information) in the storage area 1201a is consumed, and thereafter reading data (result information) from the storage area 1201a when data (result information) is inserted into the storage area 1201a.

### Modified Example 3

In a modified example 3, data (result information) are sorted in order of better parameter value (priority) and stored in the storage 132-2, and a processing unit in a subsequent stage reads the data (result information) in order from top data (result information). For example, the control unit 502-2 sorts data (result information) in order of priority and then stores the data (result information) in the storage 132-2.

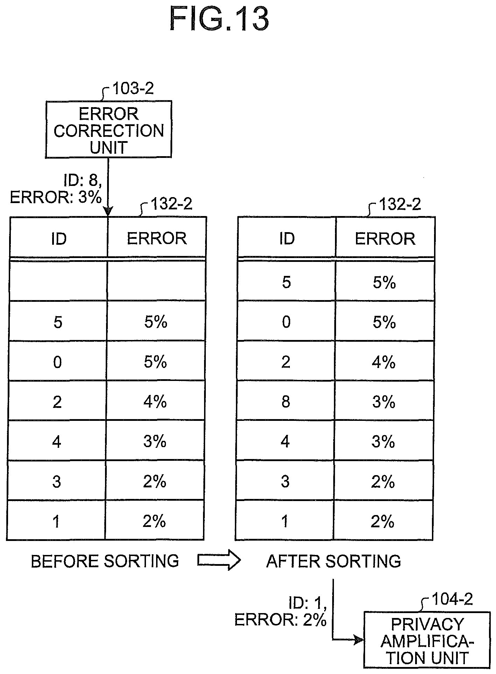

FIG. 13 is a diagram for explaining flow control according to the modified example 3. The control unit 502-2 sorts generated data (result information) according to parameters and then stores the data (result information) in the storage 132-2. For example, when the error correction unit 103-2 (the control unit 502-2) inserts data (result information) of [ID: 8, error rate: 3%], the error correction unit 103-2 sorts the data (result information) according to the error rate and stores the data (result information) in a fourth position from the top. The data (result information) after the sorting are arranged in order of better parameter, so that the privacy amplification unit 104-2 may read data (result information) from the top.

In the modified examples 1 to 3 (FIGS. 11 to 13), it can be interpreted that the parameter value itself is used as the priority. However, a priority determined according to the parameter value may be used instead of the parameter value itself.

### Modified Example 4

It may be configured so that the control unit 502-2 does not discard data (result information) according to the priority and performs only processing to acquire a processing result (result information) of a previous-stage processing unit according to the priority. For example, when the storage capacities of the storages 131-2 and 132-2 are sufficiently large and a situation where data (result information) cannot be stored does not occur, even when employing the configuration of the present modified example, it is possible to improve the secure key rate by preferentially storing data (result information) whose parameter is good.

As described above, the key sharing device according to the second arrangement can preferentially discard key data (result information) whose priority is low (parameter is bad) and can preferentially store key data (result information) whose priority is high (parameter is good) by using priority according to the parameter such as the error rate. Further, it is possible to change a threshold value of parameter of key data (result information) to be stored according to the ratio of available space of the storage. Thereby, it is possible to synchronize processing between the transmitting device and the receiving device, and further it is possible to prevent degradation of the secure key rate and increase a key generation speed of QKD by preferentially discarding data (result information) of low priority. In other words, it is possible to more efficiently realize sharing of cryptographic key than in the case of discarding data (result information) without taking the priority into consideration, so that it is possible to safely share the key data (result information) between processes while maintaining reliability.

### Third Arrangement

In the arrangements described above, whether or not there is an available space in the storage area is determined after the individual processing unit performs processing, and when there is no available space in the storage area, data (result information) that has been processed is discarded. In this method, processing up to that time is wasted by discarding the data (result information), and further it takes longer processing time for discarding, so that the secure key rate may be degraded.

Therefore, a key sharing device of the third arrangement checks whether or not there is an available space in the storage area before the individual processing unit starts processing, and when there is no available space in the storage area, the key sharing device does not start processing and checks the storage area again after waiting a predetermined period of time. When there is an available space in the storage area, the key sharing device of the present arrangement performs individual processing and stores a file of processed data (result information) into the storage. By configuring as described above, it is possible to prevent the key sharing device from uselessly performing processing when there is no available space in the storage area. It is possible to avoid unnecessary processing time, so that it is also possible to reduce degradation of the secure key rate.

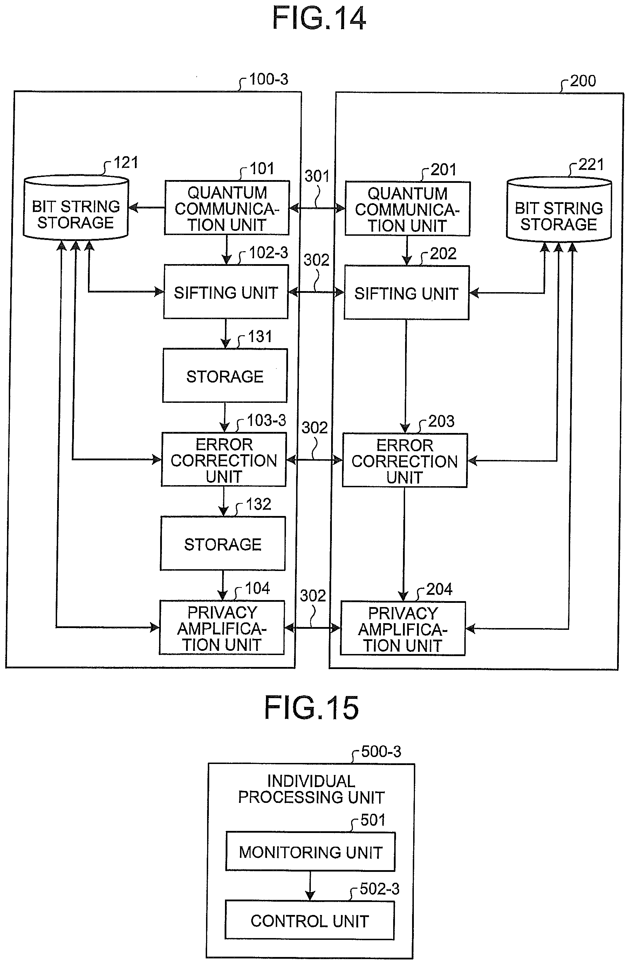

FIG. 14 is a block diagram illustrating an example of the key sharing device 100-3 according to the third arrangement. As illustrated in FIG. 14, the key sharing device 100-3 includes a quantum communication unit 101, a sifting unit 102-3, an error correction unit 103-3, a privacy amplification unit 104, storages 131 and 132, and a bit string storage 121.

FIG. 15 is a block diagram illustrating a function configuration example of an individual processing unit 500-3 of the third arrangement. In the present arrangement, the sifting unit 102-3 and the error correction unit 103-3 correspond to the individual processing unit 500-3. Each of the sifting unit 102-3 and the error correction unit 103-3 has functions as illustrated in FIG. 15. As illustrated in FIG. 15, the individual processing unit 500-3 includes a monitoring unit 501 and a control unit 502-3.

In the third arrangement, a function of the control unit 502-3 included in the individual processing unit 500-3 (the sifting unit 102-3 and the error correction unit 103-3) is different from that of the first arrangement. The other components and functions are the same as those of FIG. 2 that is a block diagram of the key sharing device 100 according to the first arrangement. Thus, the components are denoted by the same reference numerals and the description thereof will not be repeated.

When available spaces of the storages 131 and 132 are lower than a threshold value (first threshold value), the control unit 502-3 does not start execution of individual processing, and when the available spaces of the storages 131 and 132 are higher than or equal to the threshold value, the control unit 502-3 starts execution of the individual processing.

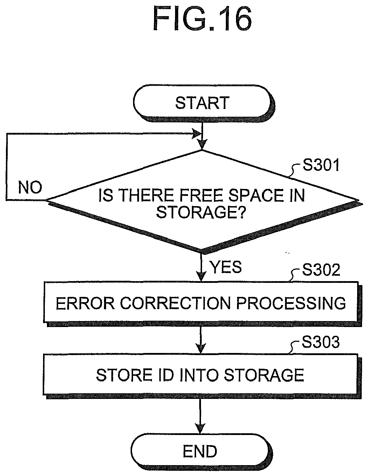

Next, flow control processing performed by the key sharing device 100-3 according to the third arrangement configured as described above will be described with reference to FIG. 16. FIG. 16 is a flowchart illustrating an example of the flow control processing according to the third arrangement. In FIG. 16, flow control in the error correction processing will be described as an example. The same procedure can be applied to other individual processing.

The control unit 502-3 of the error correction unit 103-3 determines whether or not there is an available space in the storage 132 (step S301). When there is not the available space (step S301: No), the control unit 502-3 returns to step S301 and repeats the processing until an available space occurs. The control unit 502-3 may be configured to perform the determination processing of step S301 after waiting a certain period of time.

When there is the available space (step S301: Yes), the control unit 502-3 performs the error correction processing (step S302). The control unit 502-3 stores, into the storage 132, identification information (ID) of key data on which the error correction processing has been performed (step S303). The control unit 502-3 may store data (related parameter, error rate, and the like) other than the ID into the storage 132 along with the ID. The storages 131 and 132 may store a key data to be stored in the bit string storage 121 along with identification information (ID) for identifying the key data in place of the bit string storage 121 or may store only identification information for identifying the key data stored in the bit string storage 121.

When the storage 132 is empty, the privacy amplification unit 104 in a subsequent stage waits until the ID that has been processed by the error correction unit 103-3 is accumulated. When data (result information) is stored in the storage 132, the privacy amplification unit 104 reads ID from the storage 132, performs the privacy amplification processing by reading a file of a correction key of the read ID, and generates a final cryptographic key.

In this way, the key sharing device according to the third arrangement checks whether or not there is an available space in the storage area before starting individual processing (error correction processing or the like), and when there is no available space, the key sharing device performs control so as not to start the individual processing. Thereby, it is possible to prevent degradation of the secure key rate by avoiding a process where data is discarded because the data cannot be stored in the storage area even though individual processing is performed.

### Modified Example 5

As described above, a storage (storage 131, 132, or the like) that is used for flow control may store only ID of key data or may store both key data and ID of the key data. In other words, information (result information) that is stored in the storage as a processing result of individual processing may include only ID of key data or may include both ID of key data and the key data. In a modified example 5, an example is described in which both key data and ID of the key data are stored. Although, in the present modified example, an example that is a modification of the second embodiment is described, similar modifications can be applied to the other embodiments.

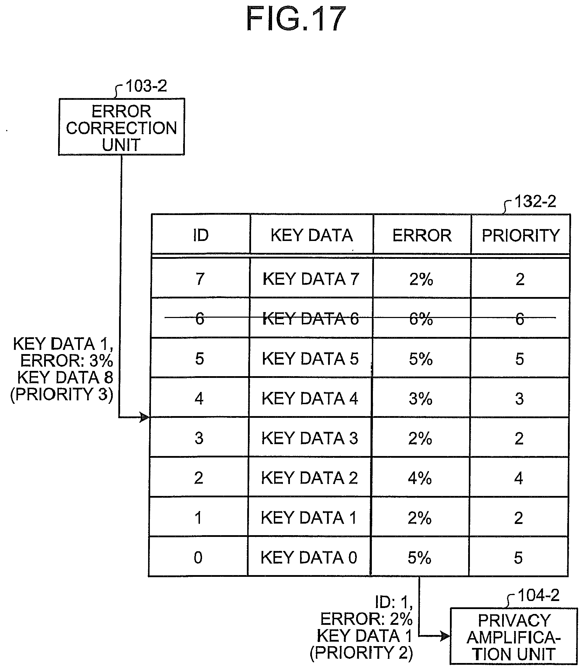

FIG. 17 is a diagram illustrating an example of a data storage method according to the modified example 5. As illustrated in FIG. 17, with the present modified example, the error correction unit 103-2 stores key data on which the error correction processing is completed (correction key data) into the storage 132-2 along with ID of the key data as result information. The privacy amplification unit 104-2 reads the ID and the key data from the storage 132-2 and performs PA.

### Modified Example 6

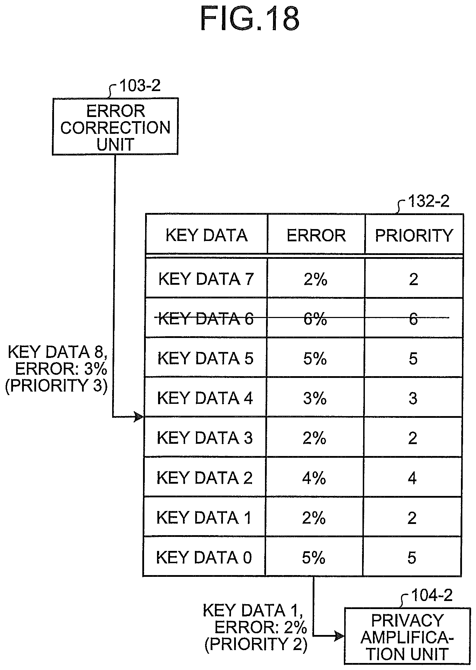

A storage that is used for flow control may store only key data as result information. FIG. 18 is a diagram illustrating an example of a data storage method according to a modified example 6 that is configured as such. Although, in the present modified example, an example that is a modification of the second embodiment is described, similar modifications can be applied to the other embodiments.

As illustrated in FIG. 18, with the present modified example, the error correction unit 103-2 stores key data on which the error correction processing is completed (correction key data) into the storage 132-2 as result information. At this time, it is unnecessary to store ID of the key data into the storage 132-2. The privacy amplification unit 104-2 reads the key data from the storage 132-2 and performs PA.

### Modified Example 7

In the above embodiments, each individual processing unit controls execution of the corresponding individual processing according to an available space of a storage that stores result information (at least one of key data and ID of the key data) that is a result of the individual processing. Execution of the individual processing may be controlled according to any information representing a usage state other than the available space. For example, the control unit 502 (502-2, 502-3) monitors the usage state of the storage based on records of inputs/outputs of result information to/from the storage or a frequency of update of data in the storage, and determines whether result information is kept stored or discarded according to the usage state. The control unit 502 (502-2, 502-3) determines the available space of the storage is less when, for example, many pieces of result information are input or output, or an update frequency of result information is high. The control unit 502 (502-2, 502-3) performs discard of result information that is obtained by the error correction processing (first embodiment), discard of result information of low priority (second embodiment), or the like, when it is determined that the available space of the storage is less.

As described above, according to the first to the third arrangements, it is possible to perform flow control that can perform QKD at high speed without degrading the performance of the system even when an available space of the storage area that stores intermediate keys is consumed.

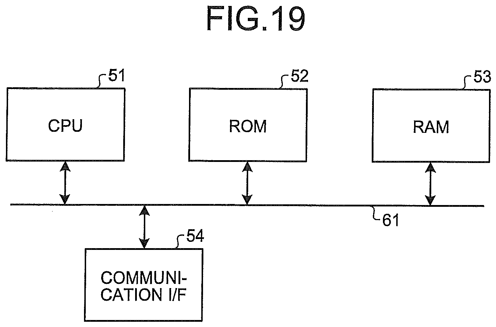

Next, a hardware configuration of the key sharing device according to the first to the third arrangements will be described with reference to FIG. 19. FIG. 19 is an explanatory diagram illustrating a hardware configuration example of the key sharing device according to the first to the third arrangements.

The key sharing device according to the first to the third arrangements includes a control device such as a CPU (Central Processing Unit) 51, storage devices such as a ROM (Read Only Memory) 52 and a RAM (Random Access Memory) 53, a communication I/F 54 that connects to a network and performs communication, and a bus 61 that connects each unit.

A program executed in the key sharing device according to the first to the third arrangements is provided by being installed in the ROM 52 or the like in advance.

The program executed in the key sharing device according to the first to the third arrangements may be recorded in a computer-readable recording medium such as a CD-ROM (Compact Disk Read Only Memory), a flexible disk (FD), a CD-R (Compact Disk Recordable), and a DVD (Digital Versatile Disk) as an installable format file or an executable format file and provided as a computer program product.

Further, the program executed in the key sharing device according to the first to the third arrangements may be stored in a computer connected to a network such as the Internet and provided by being downloaded through the network. Further, the program executed in the key sharing device according to the first to the third arrangements may be provided or distributed through a network such as the Internet.

The program executed in the key sharing device according to the first to the third arrangements can cause a computer to function as each unit of the key sharing device described above. In the computer, the CPU 51 can read the program from a computer-readable recording medium, store the program on a main storage device, and execute the program.

While certain arrangements have been described, these arrangements have been presented by way of example only, and are not intended to limit the scope of the claims. Indeed, the devices described herein may be embodied in a variety of other forms; furthermore, various omissions, substitutions and changes in the form of the arrangements described herein may be made.

Example 1. A key sharing device includes a plurality of individual processing units (500; 500-2; 500-3), each of which performs any one of a plurality of individual processing operations included in processing that generates a cryptographic key by quantum key distribution, the cryptographic key being shared between the key sharing device (100; 100-2; 100-3) and another key sharing device, wherein the individual processing unit (500; 500-2; 500-3) includes a control unit (502; 502-2; 502-3) that controls execution of the corresponding individual processing operation according to a usage state of a storage that stores result information at least one of a result of an individual processing operation and identification information for identifying the result.

Example 2. In the key sharing device according to Example 1, wherein the control unit (502) discards the result information when an available space of the storage is lower than a first threshold value.

Example 3. In the key sharing device according to Example 1, wherein the control unit (502-2) gives priority to the result information and stores the result information into the storage, when the available space of the storage is lower than the first threshold value and priority of the result information is lower than the priority stored in the storage, discards the result information, and when the available space of the storage is lower than the first threshold value and priority of the result information is higher than the priority stored in the storage, deletes, from the storage, result information whose priority is lower than that of the other result information and gives priority to the result information and stores the result information into the storage.

Example 4. In the key sharing device according to Example 1, wherein the control unit (502-2) gives priority to the result information and stores the result information into the storage, and a first individual processing unit (500-2) reads, from the storage, a result information whose priority is higher than that of the other result information among pieces of result information of a second individual processing unit (500-2), and performs a corresponding individual processing operation by using the read result information, the first individual processing unit (500-2) and the second individual processing unit (500-2) being included in the plurality of individual processing units.

Example 5. In the key sharing device according to Example 1, wherein when priority of the result information is higher than a second threshold value that is changed according to the available space of the storage, the control unit (502-2) gives priority to the result information and stores the result information into the storage, and when the priority of the result information is lower than or equal to the second threshold value, the control unit (502-2) discards the result information.

Example 6. In the key sharing device according to Example 1, wherein the control unit (502-2) stores the result information into a storage determined according to priority of the result among a plurality of storages.

Example 7. In the key sharing device according to Example 1, wherein the control unit (502-2) sorts pieces of the result information in order of priority of the result information and, then, stores the pieces of the result information into the storage.

Example 8. In the key sharing device according to any one of Examples 3 to 7, wherein the priority is determined according to one or more of an error rate of a communication path, a processing speed of a communication path, an estimated value of the number of cryptographic keys generated per unit time, and a processing speed of the individual processing operation.

Example 9. In the key sharing device according to Example 1, wherein when the available space of the storage is lower than a first threshold value, the control unit (502-3) does not start execution of the individual processing operation, and when the available space of the storage is higher than or equal to the first threshold value, the control unit (502-3) starts execution of the individual processing operation.

Example 10. In the key sharing device according to Example 1, wherein the plurality of individual processing units (500; 500-2; 500-3) includes at least one of: a quantum communication unit (101) that transmits and receives photons to and from the other key sharing device through a quantum communication channel; a sifting unit (102; 102-2; 102-3) that generates a sifted key from information of the photons; an error correction unit (103; 103-2; 103-3) that corrects errors of the sifted key and generates a correction key; and a privacy amplification unit (104; 104-2) that generates a cryptographic key that is the correction key with improved security.

Example 11. A key sharing system includes a first key sharing device and a second key sharing device, wherein the first key sharing device (100; 100-2; 100-3) includes a plurality of individual processing units (500; 500-2; 500-3), each of which performs any one of a plurality of individual processing operations included in processing that generates a cryptographic key by quantum key distribution, the cryptographic key being shared between the first key sharing device (100; 100-2; 100-3) and the second key sharing device, and the individual processing unit (500; 500-2; 500-3) includes a control unit (502; 502-2; 502-3) that controls execution of the corresponding individual processing operation according to a usage state of a storage that stores result information at least one of a result of an individual processing operation and identification information for identifying the result.

Example 12. A key sharing method includes a plurality of individual processing steps, each of which performs any one of a plurality of individual processing operations included in processing that generates a cryptographic key by quantum key distribution, the cryptographic key being shared with another key sharing device, wherein the individual processing step includes a control step of controlling execution of the corresponding individual processing operation according to a usage state of a storage that stores result information at least one of a result of an individual processing operation and identification information for identifying the result.

Example 13. A computer readable medium including programmed instructions, wherein the instructions, when executed by a computer (100; 100-2; 100-3), cause the computer (100; 100-2; 100-3) to perform: a plurality of individual processing units (500; 500-2; 500-3), each of which performs any one of a plurality of individual processing operations included in processing that generates a cryptographic key by quantum key distribution, the cryptographic key being shared with another key sharing device, wherein the individual processing unit (500; 500-2; 500-3) includes a control unit (502; 502-2; 502-3) that controls execution of the corresponding individual processing operation according to a usage state of a storage that stores result information at least one of a result of an individual processing operation and identification information for identifying the result.

## Claims

1. A key sharing device (100; 100-2; 100-3) comprising:
a plurality of individual processing units (500; 500-2; 500-3), each of which performs any one of a plurality of individual processing operations included in processing that generates a cryptographic key by quantum key distribution, the cryptographic key being shared between the key sharing device (100; 100-2; 100-3) and another key sharing device, wherein
the individual processing unit (500; 500-2; 500-3) includes a control unit (502; 502-2; 502-3) that controls execution of the corresponding individual processing operation according to a usage state of a storage that stores result information at least one of a result of an individual processing operation and identification information for identifying the result.

2. The key sharing device (100) according to claim 1, wherein
the control unit (502) discards the result information when an available space of the storage is lower than a first threshold value.

3. The key sharing device (100-2) according to claim 1, wherein
the control unit (502-2)
gives priority to the result information and stores the result information into the storage,
when the available space of the storage is lower than the first threshold value and priority of the result information is lower than the priority stored in the storage, discards the result information, and
when the available space of the storage is lower than the first threshold value and priority of the result information is higher than the priority stored in the storage, deletes, from the storage, result information whose priority is lower than that of the other result information and gives priority to the result information and stores the result information into the storage.

4. The key sharing device (100-2) according to claim 1, wherein
the control unit (502-2) gives priority to the result information and stores the result information into the storage, and
a first individual processing unit (500-2) reads, from the storage, a result information whose priority is higher than that of the other result information among pieces of result information of a second individual processing unit (500-2), and performs a corresponding individual processing operation by using the read result information, the first individual processing unit (500-2) and the second individual processing unit (500-2) being included in the plurality of individual processing units.

5. The key sharing device (100-2) according to claim 1, wherein
when priority of the result information is higher than a second threshold value that is changed according to the available space of the storage, the control unit (502-2) gives priority to the result information and stores the result information into the storage, and when the priority of the result information is lower than or equal to the second threshold value, the control unit (502-2) discards the result information.

6. The key sharing device (100-2) according to claim 1, wherein the control unit (502-2) stores the result information into a storage determined according to priority of the result among a plurality of storages.

7. The key sharing device (100-2) according to claim 1, wherein the control unit (502-2) sorts pieces of the result information in order of priority of the result information and, then, stores the pieces of the result information into the storage.

8. The key sharing device (100-2) according to any one of claims 3 to 7, wherein
the priority is determined according to one or more of an error rate of a communication path, a processing speed of a communication path, an estimated value of the number of cryptographic keys generated per unit time, and a processing speed of the individual processing operation.

9. The key sharing device (100-3) according to claim 1, wherein
when the available space of the storage is lower than a first threshold value, the control unit (502-3) does not start execution of the individual processing operation, and when the available space of the storage is higher than or equal to the first threshold value, the control unit (502-3) starts execution of the individual processing operation.

10. The key sharing device (100; 100-2; 100-3) according to claim 1, wherein
the plurality of individual processing units (500; 500-2; 500-3) includes at least one of:
a quantum communication unit (101) that transmits and receives photons to and from the other key sharing device through a quantum communication channel;
a sifting unit (102; 102-2; 102-3) that generates a sifted key from information of the photons;
an error correction unit (103; 103-2; 103-3) that corrects errors of the sifted key and generates a correction key; and
a privacy amplification unit (104; 104-2) that generates a cryptographic key that is the correction key with improved security.

11. A key sharing system comprising a first key sharing device (100; 100-2; 100-3) and a second key sharing device, wherein
the first key sharing device (100; 100-2; 100-3) includes
a plurality of individual processing units (500; 500-2; 500-3), each of which performs any one of a plurality of individual processing operations included in processing that generates a cryptographic key by quantum key distribution, the cryptographic key being shared between the first key sharing device (100; 100-2; 100-3) and the second key sharing device, and
the individual processing unit (500; 500-2; 500-3) includes
a control unit (502; 502-2; 502-3) that controls execution of the corresponding individual processing operation according to a usage state of a storage that stores result information at least one of a result of an individual processing operation and identification information for identifying the result.

12. A key sharing method comprising a plurality of individual processing steps, each of which performs any one of a plurality of individual processing operations included in processing that generates a cryptographic key by quantum key distribution, the cryptographic key being shared with another key sharing device, wherein
the individual processing step includes a control step of controlling execution of the corresponding individual processing operation according to a usage state of a storage that stores result information at least one of a result of an individual processing operation and identification information for identifying the result.

13. A computer readable medium including programmed instructions, wherein the instructions, when executed by a computer (100; 100-2; 100-3), cause the computer (100; 100-2; 100-3) to perform:
a plurality of individual processing units (500; 500-2; 500-3), each of which performs any one of a plurality of individual processing operations included in processing that generates a cryptographic key by quantum key distribution, the cryptographic key being shared with another key sharing device, wherein
the individual processing unit (500; 500-2; 500-3) includes a control unit (502; 502-2; 502-3) that controls execution of the corresponding individual processing operation according to a usage state of a storage that stores result information at least one of a result of an individual processing operation and identification information for identifying the result.
